# EUROPEAN PATENT APPLICATION

(11) **EP 4 190 866 A1**
(43) Date of publication of application: **07.06.2023**
(21) Application number: 21211911.9
(22) Date of filing: 02.12.2021
(51) Int. Cl.: C09D 11/101

(54) **RADIATION CURABLE INKJET INKS**

(71) Applicant: AGFA-GEVAERT NV, 2640 Mortsel (BE)
(72) Inventor: SAUVAGEOT, Marion, 2640 Mortsel (BE); LOCCUFIER, Johan, 2640 Mortsel (BE)
(74) Representative: Viaene, Kris

(57) **Abstract**

A radiation curable inkjet ink comprising:
- a vinylether (meth)acrylate,
- a polyfunctional (meth)acrylate, and
- a thermal cross-linking agent,
characterized in that a weight ratio vinylether (meth)acrylate/polyfunctional (meth)acrylate is at least 0.5.

## Description

### Technical field of the Invention

The present invention relates to a method of manufacturing Printed Circuit Boards including an inkjet printing step and to inkjet inks used therein.

### Background art for the invention

The production workflow of printed circuit boards (PCBs) is gradually shifting from the standard workflow towards a digital workflow to reduce the amount of process steps and lowering the cost and the environmental impact, especially for short run productions.

Inkjet printing is a preferred digital manufacturing technology for different steps of the PCB manufacturing process going from etch resist over solder mask to legend printing. Preferred inkjet inks are UV curable ink jet inks.

In the different production steps of PCBs, adhesion of the inkjet inks towards various substrates is of crucial importance. When the radiation curable inkjet ink is used for legend printing, the adhesion of the cured inkjet ink on the solder mask has to survive the severe conditions used during soldering (solder resistance) and ENIG plating (ENIG plating resistance). Especially the ENIG plating process wherein severe and varying conditions (pH and temperature) are used are very demanding as regard to the adhesion requirements of the inkjet ink.

EP-A 1624001 (Taiyo Ink Manufacturing) discloses an inkjet ink for solder mask printing comprising a (meth)acrylate monomer including a thermosetting functional group.

WO2013/146706 (Taiyo Ink Manufacturing) discloses an inkjet ink for legend printing comprising a (meth)acryloyl group-containing monomer, a blocked isocyanate and a photo-polymerization initiator.

WO2020/109769 (Electra Polymers) discloses an inkjet ink for solder mask printing comprising a reactive monomer, an oligomer of prepolymer containing at least one epoxy or oxetane functional group, a free radical polymerizable compound, a thermal cross-linking agent and a radical initiator.

Inkjet jet inks used for legend printing have to combine a good adhesion towards solder mask and a sufficient resistance for typical finishing processes used in PCB manufacturing, such as soldering and ENIG plating.

### Summary of the invention

It is an object of the invention to provide a radiation curable inkjet ink for legend printing in the manufacturing of printed circuit boards (PCBs) combining a good adhesion towards solder mask and a sufficient resistance against typical finishing processes, such as soldering and ENIG plating.

The object of the invention is realized by the radiation curable inkjet ink as defined in claim 1.

Further objects of the invention will become apparent from the description hereinafter.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted alkaryl group is preferably a phenyl or naphthyl group including one, two, three or more C₁ to C₆-alkyl groups.

Unless otherwise specified a substituted or unsubstituted aralkyl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, amine, ether, thioether, ketone, aldehyde, sulfoxide, sulfone, sulfonate ester, sulphonamide, -CI, -Br, -I, -OH, -SH, -CN and -NO₂.

### Radiation Curable Inkjet Ink

The radiation curable inkjet ink according to the invention comprises:
- a vinylether (meth)acrylate,
- a polyfunctional (meth)acrylate, and
- a thermal cross-linking agent,
characterized in that a weight ratio vinylether (meth)acrylate/polyfunctional (meth)acrylate is at least 0.5.

The radiation curable inkjet ink may be cured with any type of radiation but is preferably cured with UV radiation, more preferably with UV radiation from UV LEDs. The radiation curable inkjet ink is thus preferably a UV curable inkjet ink.

For reliable industrial inkjet printing, the viscosity of the radiation curable inkjet ink is preferably no more than 20 mPa.s, more preferably between 1 and 18 mPa.s, and most preferably between 4 and 14 mPa.s, all measured at 45°C and at a shear rate of 1000 s⁻¹ .

A preferred jetting temperature is between 10 and 70°C, more preferably between 20 and 55°C, and most preferably between 25 and 50°C.

For good image quality and adhesion, the surface tension of the radiation curable inkjet ink is preferably in the range of 18 to 70 mN/m at 25°C, more preferably in the range of 20 to 40 mN/m at 25°C.

### Polymerizable compounds

The inkjet ink according to the present invention comprises a vinylether (meth)acrylate and a polyfunctional (meht)acrylate in a weight ratio vinylether (meth)acrylate to polyfunctional (meth)acrylate of at least 0.5, preferably at least 0.75, more preferably at least 1.0, most preferably at least 1.5.

A polyfunctional (meth)acrylate referred to herein means a compound including at least three (meth)acrylate groups.

The inkjet ink may further comprise one or more monofunctional and/or difunctional (meth)acrylates.

The inkjet ink may also comprise polymerizable compounds other than (meth)acrylate compounds.

### Vinylether (meth)acrylate

The radiation curable ink jet ink according to the present invention includes a vinylether (meth)acrylate. Such a compound includes both a vinylether group and a (meth)acrylate group. Such monomers are disclosed in EP-A 2848659, paragraphs [0099] to [0104]).

Examples of vinylether (meth)acrylates are 2-(2-vinyloxyethoxy) ethyl acrylate; 2-vinyloxyethyl (meth)acrylate; 3-vinyloxypropyl (meth)acrylate; 1-methyl-2-vinyloxyethyl(meth)acrylate; 2-vinyloxypropyl (meth)acrylate; 4-vinyloxybutyl (meth)acrylate; 1-methyl-3-vinyloxypropyl (meth)acrylate; 1-vinyloxymethylpropyl (meth)acrylate; 2-methyl-3-vinyloxypropyl (meth)acrylate; 3-methyl-3-vinyloxypropyl (meth)acrylate; 1,1-dimethyl-2-vinyloxyethyl (meth)acrylate; 3-vinyloxybutyl (meth)acrylate; 1-methyl-2-vinyloxypropyl (meth)acrylate; 2-vinyloxybutyl (meth)acrylate; 4-vinyloxy-cyclohexyl (meth)acrylate; 5-vinyloxypentyl (meth)acrylate; 6- vinyloxyhexy (meth)acrylate; 4-vinyloxymethylcyclohexylmethyl (meth)acrylate; p-vinyloxy-methylphenylmethyl (meth)acrylate; 2-(vinyloxyethoxy)ethyl (meth)acrylate; 2-(vinyloxyisopropoxy)ethyl (meth)acrylate; 2-(vinyloxyethoxy)propyl (meth) acrylate; 2-(vinyloxyethoxy)isopropyl (meth)acrylate;2-(vinyloxyisopropoxy) propyl (meth)acrylate; 2-(vinyloxyisopropoxy)isopropyl (meth)acrylate; 2-(vinyloxyethoxyethoxy)ethyl(meth)acrylate; 2-(vinyloxyethoxyisopropoxy)ethyl (meth)acrylate; 2-(vinyloxyethoxyisopropoxy)propyl (meth)acrylate; 2-(vinyloxyethoxyethoxy)isopropyl (meth)acrylate; 2-(vinyloxyethoxy-isopropoxy)isopropyl (meth)acrylate; 2-(vinyloxyethoxyethoxyethoxy)ethyl (meth)acrylate; polyethylene glycol monovinyl ether (meth)acrylate; and polypropylene glycol monovinyl ether (meth)acrylate.

Among these examples, 2-(2-vinyloxyedioxy)ethyl acrylate (VEEA) is particularly preferred in terms of the balance between the curability and the viscosity of the inkjet ink.

The amount of vinylether (meth)acrylate is preferably at least 3 wt%, more preferably from 15 to 25 wt%.

### Polyfunctional (meth)acrylate

A polyfunctional (meth)acrylate referred to herein means a compound including at least three (meth)acrylate groups.

Examples of trifunctional or higher functional (meth)acrylates are trimethylolpropane tri(meth)acrylate, EO-modified trimethylolpropane tri(meth)acrylate, pentaerythritol tri(meth)acrylate, pentaerythritol tetra(meth) acrylate, dipentaerythritol hexa(meth)acrylate, ditrimethylolpropane tetra(meth)acrylate, glycerinpropoxy tri(meth)acrylate, caprolactone-modified trimethylolproppane, pentaerythritolethoxy tetra(meth)acrylate, and caprolactam-modified dipentaerythritol hexa(meth) acrylate.

Particularly preferred polyfunctional (meth)acrylates are trimethylolpropane triacrylate and ditrimethylolpropane tetraacrylate.

### Monofunctional (meth)acrylate

The inkjet ink may comprise monofunctional (meth)acrylate as disclosed in EP-A 1911814 paragraph [0106] and [0107].

Suitable monofunctional monomers include caprolactone acrylate, cyclic trimethylolpropane formal acrylate, ethoxylated nonyl phenol acrylate, isodecyl acrylate, isooctyl acrylate, octyldecyl acrylate, alkoxylated phenol acrylate, tridecyl acrylate, isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, 2-acryloyloxyethylsuccinic acid, 2-acryloyxyethylphthalic acid, 2-acryloxyethyl-2-hydroxyethyl-phthalic acid, lactone modified flexible acrylate, ethoxyethoxyethylacrylate, 2 phenoxyethyl acrylate, N-vinyl caprolactam and t-butylcyclohexyl acrylate.

Other suitable monofunctional acrylates include caprolactone acrylate, cyclic trimethylolpropane formal acrylate, ethoxyethoxyethylmethacrylate, ethoxylated nonyl phenol acrylate, isodecyl acrylate, isooctyl acrylate, octyldecyl acrylate, alkoxylated phenol acrylate, and tridecyl acrylate.

Suitable monofunctional acrylates are tetrahydrofurfuryl methacrylate, alkyl acrylate (preferably a C₁₂ to C₁₅ alkyl acrylate), ethoxyethoxyethylacrylate, 2 phenoxyethyl acrylate, ethoxylated-4-phenyl acrylate, and 3,3,5 trimethyl cyclohexyl acrylate and methoxy polyethylene glycol (350) acrylate.

### Difunctional (meth)acrylate

The inkjet may also comprise difunctional (meth)acrylates, i.e. a compound including two (meth)acrylate groups.

Suitable difunctional (meth)acrylates include dipropylene glycol di(meth)acrylate, triethylene glycol di(meth)acrylate, tetraethylene glycol di(meth)acrylate, polyethylene glycol di(meth)acrylate, dipropylene glycol di(meth)acrylate, dipropylene glycol diacrylate (DPGDA), tripropylene glycol di(meth)acrylate, polypropylene glycol di(meth)acrylate, 1,4-butanediol di(meth)acrylate, 1,6-hexanediol di(meth)acrylate, 1,9-nonane diol di(meth)acrylate, neopentyl glycol di(meth)acrylate, dimethylol tricyclodecane di(meth)acrylate, bisphenol A ethylene oxide (EO) adduct di(meth)acrylate, bisphenol A propylene oxide (PO) adduct di(meth)acrylate, hydroxypivalic acid neopentyl glycol di(meth)acrylate, and polytetramethylene glycol di(meth)acrylate.

### Thermal cross-linking agents

The inkjet ink may comprise any thermal cross-linking agent.

A thermal cross-linking agent as referred herein is a compound comprising at least two functional groups that are capable of reacting with another functional group, present in the cured polymer, upon heating, thereby forming a covalent link between at least two polymer chains. The thermal crosslinking agent may have different degrees of functionality.

The inkjet ink may comprise a mixture of different thermal cross-linking agents.

A preferred thermal cross-linking agent is an isocyanate compound or a triazine compound.

The isocyanate compound is preferably an aliphatic/ alicyclic isocyanate or an aromatic isocyanates.

Examples of aliphatic/alicyclic isocyanates include 1,6-hexamethylene diisocyanate (HDI or HMDI), isophorone diisocyanate (IPDI), methylcyclohexane 2,4-(2,6)-diisocyanate (hydrogenated TDI), 4,4'-methylenebis(cyclohexylisocyanate) (hydrogenated MDI), 1,3-(isocyanatomethyl)cyclohexane (hydrogenated XDI), norbornene diisocyanate (NDI), lysine diisocyanate (LDI), trimethyl- hexamethylene diisocyanate and (TMDI), dimer acid diisocyanate (DDI), N,N',N"-tris(6-isocyanate-hexamethylene)biuret, HDI trimer, HDI uretdione and IPDI trimer.

Examples of aromatic isocyanates include toluene diisocyanate (TDI), 4,4'-diphenyl-methanediisocyanate (MDI) and xylylene diisocyanate (XDI).

The isocyanate compound may be blocked or unblocked, preferably blocked.

A blocking agent used to form a blocked isocyanate is a protective group, which is removed at elevated temperature, for example during a thermal curing process. Using a blocked isocyanate typically improves the storage stability of the inkjet ink.

Examples of the blocking agent include alcohols such as ethanol, n-propanol, isopropanol, t-butanol, and isobutanol; phenols such as phenol, chlorophenol, cresol, xylenol, and p-nitrophenol; alkylphenols such as p-t-butylphenol, p-sec-butylphenol, p-sec-amylphenol, p-octylphenol, and p-nonylphenol; basic nitrogen-containing compounds such as 3-hydroxypyridine, S-hydroxyquinoline, and 8-hydroxyquinaldine; active methylene compounds such as diethyl malonate, ethyl acetoacetate, and acetylacetone; acid amides such as acetamide, acrylamide, and acetanilide; acid imides such as succinimide and maleic imide; imidazoles such as 2-ethylimidazole and 2-ethyl-4- methylimidazole; pyrazoles such as pyrazole, 3-methylpyrazole, and 3,5-dimethylpyrazole; lactams such as 2-pyrrolidone and 8-caprolactam; oximes of ketone or aldehyde, such as acetoxime, methyl ethyl ketone oxime, cyclohexanone oxime, and acetaldoxime; ethyleneimine; and bisulfite.

Hindered secondary amines may be used as blocking agents for toxicology reasons. Preferred hindered secondary amines are selected form the group consisting of ethyl-tert.butyl amine, diisopropyl amine, 2,6-dimethyl-piperidine, ethyl-isopropyl amine, di-tert.butyl amine and diisobutyl amine.

A particular preferred isocyanate compound is a HDI biuret blocked with 3, 5-dimethylpyrazole, commercially available from Baxenden Chemicals Ltd as Trixene Bl 7960.

Any triazine compound having thermal cross-linking properties may be used.

A preferred triazine compound has a chemical structure according to Formula III, 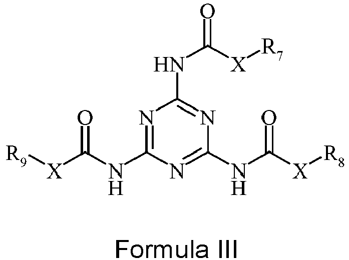 wherein
X represents N, O, S, or P;
R₇, R₈ and R₉ independently from each other represent a substituted or unsubstituted alkyl group.

X preferably represents oxygen.

Preferably, R₇, R₈ and R₉ independently from each other represent a substituted or unsubstituted C1-C8 alkyl group. More preferably, R₇, R₈ and R₉ independently from each other represent a group selected from the group consisting of methyl, ethyl, n-propyl, i-propyl, butyl, n-octyl, 2-ethyl hexyl.

Preferred triazine compounds according to Formula III and their preparation method are disclosed in US5084541 (American Cyanamid Company).

Preferred triazine compounds according to Formula III are commercially available from Allnex under the name Cymel^{®} NF 2000 and from BASF under the name Larotact^{®} 150.

The inkjet ink according to the present invention preferably includes a blocked isocyanate compound or a triazine compound according to Formula III.

More preferably, the inkjet ink includes both a blocked isocyanate and a triazine compound according Formula III.

The total amount of thermal cross-linking agents is preferably from 0.5 up to 10 wt% more preferably from 1 up to 7.5 wt%, most preferably from 2.5 up to 5 wt%, all relative to the total weight of the inkjet inks.

### Photoinitiators

The radiation curable inkjet ink preferably includes a photoinitiator, preferably a free radical photoinitiator.

A free radical photoinitiator is a chemical compound that initiates polymerization of monomers and oligomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photoinitiators are disclosed in CRIVELLO, J.V., et al. Photoinitiators for Free Radical, Cationic and Anionic Photopolymerization. 2nd edition. Edited by BRADLEY, G.. London, UK: John Wiley and Sons Ltd, 1998. p.276-293.

Specific examples of free radical photoinitiators may include, but are not limited to, the following compounds or combinations thereof: benzophenone and substituted benzophenones; 1-hydroxycyclohexyl phenyl ketone; thioxanthones such as isopropylthioxanthone; 2-hydroxy-2-methyl-1-phenylpropan-1-one; 2-benzyl-2-dimethylamino- (4-morpholinophenyl) butan-1-one; benzyl dimethylketal; 2-methyl-1- [4- (methylthio) phenyl] -2-morpholinopropan-1-one; 2,2-dimethoxy-1, 2-diphenylethan-1-one or 5,7-diiodo-3- butoxy-6-fluorone.

A preferred photoinitiator is a thioxanthone compound, such as Darocur ITX, an isomeric mixture of 2- and 4-isopropylthioxanthone.

Another preferred photoinitiator is an acylphosphine oxide compound. The acylphosphine oxide compound may be selected from the group consisting of a mono-acylphosphine oxide and a di-acylphosphine oxide. Preferred acylphosphine oxide photoinitiators are diphenyl(2,4,6-trimethylbenzoyl)phosphine oxide (TPO), ethyl (2,4,6-trimethylbenzoyl) phenyl phosphinate (TPO-L), phenylbis(2,4,6-trimethylbenzoyl)phosphine oxide) (BAPO), bis (2,6- dimethyl-benzoyl)-2,4,4-trimethylpentylphosphine oxide and 2,4,6-trimethoxybenzoyl-diphenylphosphine oxide.

Other preferred photoinitiators are α-hydroxy-ketone Type I photoinitiators such as for example oligo[2-hydroxy-2-methyl-1-[4-(1-methylvinyl-phenyl]propanone] available as Esacure^{®} KIP IT from IGM resins.

A preferred amount of photoinitiator is from 0.2 up to 20 wt%, more preferably from 0.5 up to 10 wt%, most preferably from 1 up to 8 wt%, particularly preferred from 1.5 up to 6 wt%, all relative to the total weight of the radiation curable inkjet ink.

In order to increase the photosensitivity further, the radiation curable inkjet ink may additionally contain co-initiators. Suitable examples of co-initiators can be categorized in three groups:
(1) tertiary aliphatic amines such as methyldiethanolamine, dimethylethanolamine, triethanolamine, triethylamine and N-methylmorpholine;
(2) aromatic amines such as amylparadimethyl-aminobenzoate, 2-n-butoxyethyl-4-(dimethylamino) benzoate, 2-(dimethylamino)-ethylbenzoate, ethyl-4-(dimethyl-amino)benzoate, and 2-ethylhexyl-4-(dimethylamino)benzoate; and
(3) (meth)acrylated amines such as dialkylamino alkyl(meth)acrylates (e.g., diethyl-aminoethylacrylate) or N-morpholinoalkyl-(meth)acrylates (e.g., N-morpholinoethyl-acrylate).

Preferred co-initiators are aminobenzoates.

A preferred low molecular aminobenzoate is Genocure^{®} EPD from RAHN.

Particularly preferred aminobenzoate co-initiators are selected from the group consisting of polymerisable, oligomeric and polymeric aminobenzoate co-initiators.

Polymerisable co-initiators are disclosed in EP-A 2033949 (Agfa Graphics N.V.).

In a more preferred embodiment, the aminobenzoate co-initiators are oligomeric aminobenzoate derivatives.

Particularly preferred aminobenzoates are polyether derivatives of aminobenzoates, wherein the polyether is selected from the group consisting of poly(ethylene oxide), poly(propylene oxide), copolymers thereof, and poly(tetrahydrofuran), ethoxylated or propoxylated neopentyl glycol, ethoxylated or propoxylated trimethylpropane and ethoxylated or propoxylated pentaerythritol.

Preferred oligomeric aminobenzoates are disclosed in WO1996/33157 (Lambson Fine Chemicals Ltd.) and WO2011/030089 (Sun Chemicals B.V.). Typical examples of polyethylene glycol bis p-dimethylaminobenzoate are OMNIPOL ASA, commercially available from IGM Resins and Speedcure 7040, commercially available from Lambson Fine Chemicals.

Other oligomeric or polymeric co-initiators are for example ESACURE A198, a polyfunctional amine from IGM and SARTOMER^{®} CN3755, an acrylated amine co-initiator from ARKEMA.

### Adhesion promoter

The radiation curable inkjet ink may include an adhesion promoter to further optimize the adhesion of the cured composition to various surfaces.

Any adhesion promoter may be used, for example those disclosed in WO2004/026977 and WO2004/105 both from AVECIA; WO2017/009097 and WO2020/104302 both from Agfa Gevaert; and WO2018/087059, WO2018087052 WO2018087056 and WO2018087055, all from Agfa Gevaert/Electra Polymers.

Preferred adhesion promoters are silane compounds, such as disclosed in EP-A 3119170 (Agfa Gevaert), paragraphs [0034] to [0039].

The radiation curable inkjet ink may include one adhesion promoter or a combination of two, three or more different adhesion promoters.

The total amount of adhesion promoters is preferably between 0.1 and 20 wt%, more preferably between 0.5 and 15 wt%, most preferably between 1 and 10 wt%, all relative to the total weight of the inkjet ink.

However, it has been observed that an inkjet ink according to the present invention may have a sufficient adhesion, even after soldering, gold or ENIG plating, in the absence of an adhesion promoter. As the presence of adhesion promoters may result in a worse stability of the inkjet ink, the radiation curable inkjet ink according to the present invention preferably does not contain an adhesion promoter.

### Colorants

The UV free radical curable inkjet ink according to the invention includes at least one colorant, preferably a colour pigment.

The colour pigments may be black, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH , 2004. ISBN 3527305769.

However, most preferably the UV free radical curable inkjet ink includes a colorant selected from the group consisting of a white pigment, a yellow pigment and a black pigment. It was observed that the component legend markings on a generally green coloured protective cover layer is best legible when using a white, yellow or black colour, especially a white colour. For this reason, the UV free radical curable inkjet ink preferably includes a titanium dioxide pigment as white pigment.

Particularly preferred pigments for yellow inkjet inks are C.I Pigment Yellow 151, C.I. Pigment Yellow 180 and C.I. Pigment Yellow 74, and mixed crystals thereof.

For a black inkjet ink, suitable pigment materials include carbon blacks such as Regal^{™} 400R, Mogul^{™} L, Elftex^{™} 320 from Cabot Co., or Carbon Black FW18, Special Black^{™} 250, Special Black^{™} 350, Special Black^{™} 550, Printex^{™} 25, Printex^{™} 35, Printex^{™} 55, Printex^{™} 90, Printex^{™} 150T from DEGUSSA Co., MA8 from MITSUBISHI CHEMICAL Co., and C.I. Pigment Black 7 and C.I. Pigment Black 11.

For a black inkjet ink, preferably a combination of a carbon black pigment and at least one pigment selected from the group consisting of a blue pigment, a cyan pigment, a magenta pigment and a red pigment is used. It was found that the legibility of component legend markings on a PCB were further improved using such a black inkjet ink. In a particularly preferred embodiment of such a black inkjet ink, a pigment is selected from the group consisting of C.I. Pigment Blue 15:3, C.I. Pigment Blue 15:4, a diketopyrrolo pyrrole pigment (e.g. C.I Pigment Red 254) , a quinacridone pigment (e.g. C.I. Pigment Violet 19, C.I. Pigment Red 202, and C.I. Pigment Red 122), and mixed crystals of quinacridone pigments and/or diketopyrrolo pyrrole pigments.

The pigment particles in the inkjet ink should be sufficiently small to permit free flow of the ink through the inkjet printing device, especially at the ejecting nozzles. It is also desirable to use small particles for maximum colour strength and to slow down sedimentation.

The average particle size of the pigment in the inkjet ink should be between 0.02 µm and 3 µm. Preferably the average pigment particle size is between 0.05 and 1 µm, more preferably between 0.070 and 0.300 µm, particularly preferably between 0.80 and 0.200 µm and most preferably between 0.090 and 0.150 µm.

The pigment is used in the inkjet ink in an amount of 0.1 to 20 wt%, preferably 1 to 10 wt%, and most preferably 2 to 6 wt% based on the total weight of the pigmented inkjet ink.

A white inkjet ink preferably includes a pigment with a high refractive index, preferably a refractive index greater than 1.60, preferably greater than 2.00, more preferably greater than 2.50 and most preferably greater than 2.60. Such white pigments generally have a very high covering power, i.e. a limited amount of white ink is necessary to hide the colour and defects of the core layer. The most preferred white pigment is titanium dioxide.

The white inkjet ink preferably contains the white pigment in an amount of 5 wt% to 30 wt%, more preferably 8 to 25 wt% of white pigment based upon the total weight of the white inkjet ink.

The numeric average particle diameter of the white pigment is preferably from 150 to 500 nm, more preferably from 200 to 400 nm, and most preferably from 250 to 350 nm. Sufficient hiding power cannot be obtained when the average diameter is less than 150 nm, and the storage ability and the jet-out suitability of the ink tend to be degraded when the average diameter exceeds 500 nm.

### Polymeric Dispersants

If the colorant in the radiation curable inkjet is a pigment, then the radiation curable inkjet preferably contains a dispersant, more preferably a polymeric dispersant, for dispersing the pigment.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP-A 1911814.

Commercial examples of polymeric dispersants are the following:
- DISPERBYK^{™} dispersants available from BYK CHEMIE GMBH;
- SOLSPERSE^{™} dispersants available from NOVEON;
- TEGO^{™} DISPERS^{™} dispersants from EVONIK;
- EDAPLAN^{™} dispersants from MÜNZING CHEMIE;
- ETHACRYL^{™} dispersants from LYONDELL;
- GANEX^{™} dispersants from ISP;
- DISPEX^{™} and EFKA^{™} dispersants from CIBA SPECIALTY CHEMICALS INC;
- DISPONER^{™} dispersants from DEUCHEM; and
- JONCRYL^{™} dispersants from JOHNSON POLYMER.

### Polymerization Inhibitors

The radiation curable inkjet ink may contain at least one inhibitor for improving the thermal stability of the ink.

Suitable polymerization inhibitors include phenol type antioxidants, hindered amine light stabilizers, phosphor type antioxidants, hydroquinone monomethyl ether commonly used in (meth)acrylate monomers, and hydroquinone, t-butyl-catechol, pyrogallol, 2,6-di-tert.butyl-4-methylphenol (=BHT) may also be used.

Suitable commercial inhibitors are, for example, Sumilizer^{™} GA-80, Sumilizer^{™} GM and Sumilizer^{™} GS produced by Sumitomo Chemical Co. Ltd.; Genorad^{™} 16, Genorad^{™}18 and Genorad^{™} 20 from Rahn AG; lrgastab^{™}UV10 and Irgastab^{™} UV22, Tinuvin^{™} 460 and CGS20 from Ciba Specialty Chemicals; Floorstab^{™} UV range (UV-1, UV-2, UV-5 and UV-8) from Kromachem Ltd, Additol^{™} S range (S100, S110, S120 and S130) from Cytec Surface Specialties.

Since excessive addition of these polymerization inhibitors may lower the curing speed, it is preferred that the amount capable of preventing polymerization is determined prior to blending. The amount of a polymerization inhibitor is preferably lower than 5 wt%, more preferably lower than 3 wt% of the total radiation curable inkjet ink.

### Surfactants

The radiation curable inkjet ink may contain at least one surfactant.

The surfactant can be anionic, cationic, non-ionic, or zwitter-ionic and is usually added in a total quantity less than 1wt% based on the total weight of the radiation curable inkjet ink.

Suitable surfactants include fluorinated surfactants, fatty acid salts, ester salts of a higher alcohol, alkylbenzene sulfonate salts, sulfosuccinate ester salts and phosphate ester salts of a higher alcohol (for example, sodium dodecylbenzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL^{™} 104, 104H, 440, 465 and TG available from AIR PRODUCTS & CHEMICALS INC.).

Preferred surfactants are selected from fluoric surfactants (such as fluorinated hydrocarbons) and silicone surfactants. The silicone surfactants are preferably siloxanes and can be alkoxylated, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK^{™} 333 and BYK^{™} UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferably the surfactant is present in the radiation curable inkjet ink in an amount of 0 to 3 wt% based on the total weight of the radiation curable inkjet ink.

### Flame retardant

The radiation curable inkjet ink preferably comprises a flame retardant.

Preferred flame retardants are inorganic flame retardants, such as Alumina Trihydrate and Boehmite, and organo-phosphor compounds, such as organophosphates (e.g. triphenyl phosphate (TPP), resorcinol bis (diphenylphosphate) (RDP), bisphenol A diphenyl phosphate (BADP), and tricresyl phosphate (TCP)); organo-phosphonates (e.g. dimethyl methylphosphonate (DMMP)); and organophosphinates (e.g. aluminium dimethylphosphinate).

Preferred flame retardants are disclosed in WO2019/121098.

### Preparation of Inkjet Inks

The preparation of pigmented radiation curable inkjet inks is well-known to the skilled person. Preferred methods of preparation are disclosed in paragraphs [0076] to [0085] of WO2011/069943.

### Method of manufacturing an electronic device.

The method of manufacturing an electronic device according to the present invention includes at least one inkjet printing step wherein a radiation curable inkjet ink as described above is jetted and cured on a substrate.

According to a preferred embodiment, the electronic device is a Printed Circuit Board (PCB).

According to a particular preferred embodiment, the method of manufacturing a PCB includes an inkjet printing step for legend printing. The inkjet ink is then typically provided on a solder mask.

A heat treatment is preferably applied to the jetted and cured radiation curable inkjet ink. The heat treatment is preferably carried out at a temperature between 80°C and 250°C. The temperature is preferably not less than 100°C, more preferably not less than 120°C. To prevent charring of the solder mask, the temperature is preferably not higher than 200°C, more preferably not higher than 160°C.

The thermal treatment is typically carried out between 15 and 90 minutes.

The purpose of the thermal treatment is to further increase the polymerization degree of the applied inkjet ink.

The radiation curable inkjet ink may be cured by exposing the ink to actinic radiation, such as electron beam or ultraviolet (UV) radiation. Preferably the radiation curable inkjet ink is cured by UV radiation, more preferably using UV LED curing.

The method of manufacturing a PCB may comprise two, three or more inkjet printing steps. For example the method may comprise two inkjet printing steps wherein a solder mask is provided in one inkjet printing step and legend printing is carried out in a second inkjet printing step.

A third inkjet printing step may be used for etch resist printing.

### Inkjet Printing Devices

The radiation curable inkjet ink may be jetted by one or more print heads ejecting small droplets in a controlled manner through nozzles onto a substrate, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing. Other inkjet print heads can be used and include various types, such as a continuous type.

The inkjet print head normally scans back and forth in a transversal direction across the moving ink-receiving surface (substrate). Often the inkjet print head does not print on the way back. Bi-directional printing is preferred for obtaining a high areal throughput. Another preferred printing method is by a "single pass printing process", which can be performed by using page wide inkjet print heads or multiple staggered inkjet print heads which cover the entire width of the ink-receiving surface. In a single pass printing process the inkjet print heads usually remain stationary and the ink-receiving surface is transported under the inkjet print heads.

### Curing Devices

The radiation curable inkjet ink can be cured by exposing them to actinic radiation, such as electron beam or ultraviolet radiation. Preferably the radiation curable inkjet ink is cured by ultraviolet radiation, more preferably using UV LED curing.

In inkjet printing, the curing means may be arranged in combination with the print head of the inkjet printer, travelling therewith so that the curable liquid is exposed to curing radiation very shortly after been jetted.

In such an arrangement, with the exception of UV LEDs, it can be difficult to provide a small enough radiation source connected to and travelling with the print head. Therefore, a static fixed radiation source may be employed, e.g. a source of curing UV-light, connected to the radiation source by means of flexible radiation conductive means such as a fibre optic bundle or an internally reflective flexible tube.

Alternatively, the actinic radiation may be supplied from a fixed source to the radiation head by an arrangement of mirrors including a mirror upon the radiation head.

The source of radiation may also be an elongated radiation source extending transversely across the substrate to be cured. It may be adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

In a preferred embodiment, the radiation curable inkjet ink is cured by UV LEDs. The inkjet printing device preferably contains one or more UV LEDs preferably with a wavelength larger than 360 nm, preferably one or more UV LEDs with a wavelength larger than 380 nm, and most preferably UV LEDs with a wavelength of about 395 nm.

Furthermore, it is possible to cure the ink image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Materials

All materials used in the following examples were readily available from standard sources such as ALDRICH CHEMICAL Co. (Belgium) and ACROS (Belgium) unless otherwise specified. The water used was deionized water.

Ti0₂ is a titaniumdioxide dispersion available as TRONOX^{®} CR834 from TRONOX.

**VEEA** is 2-(vinylethoxy)ethyl acrylate available from NIPPON SHOKUBAI, Japan.

**TMPTA** is trimethylolpropane triacrylate, a polyfunctional acrylate available from ALLNEX.

**Ebecryl 1360** is a polysiloxane hexa-acrylate slip agent from ALLNEX.

**Trixene B17960** is a blocked HDI biuret from BAXENDEN Chemicals.

**Trixene B17981** is a blocked HDI trimer from BAXENDEN Chemicals.

**Trixene B17982** is a blocked HDI trimer from BAXENDEN Chemicals.

**4HBA** is 4-hydroxybutyl acrylate, available from KOWA.

**INHIB** is a mixture forming a polymerization inhibitor having a composition according to Table 1.

**Table 1**

| **Component** | **wt%** |
|---|---|
| DPGDA | 82.4 |
| p-methoxyphenol | 4.0 |
| 2,6-di-tert-butyl-4-methylphenol | 10.0 |
| Cupferron^{™} AL | 3.6 |

**Cupferron^{™} AL** is aluminum N-nitrosophenylhydroxylamine from WAKO CHEMICALS LTD.

**DPGDA** is dipropyleneglycoldiacrylate, available as Sartomer SR508 from ARKEMA.

**Ebecryl 1360** is a polysiloxane hexa-acrylate slip agent from ALLNEX.

**BAPO** is a bis(2,4,6-trimethylbenzoyl)-phenylphosphineoxide photoinitiator available as Irgacure^{™} 819 from BASF.

**Esacure KIP IT** is photoinitiator available from IGM RESINS.

**TPO-L** is photoinitiator available from IGM RESINS.

### Methods

### Viscosity

The viscosity of the inks was measured at 45°C and at a shear rate of 1000 s⁻¹ using a "Robotic Viscometer Type VISCObot" from CAMBRIDGE APPLIED SYSTEMS.

For industrial inkjet printing, the viscosity at 45°C and at a shear rate of 1000 s⁻¹ is preferably between 5.0 and 15 mPa.s. More preferably the viscosity at 45°C and at a shear rate of 1 000 s⁻¹ is less than 15 mPa.s.

### Adhesion of the inkjet inks

The adhesion was evaluated by cross hatch test followed by a tape test with a Tesatape^{™} 4104 PVC tape. The evaluation was made in accordance with a criterion described in Table 2.

**Table 2**

| **Evaluation value** | **Criterion** |
|---|---|
| **0** | Nothing removed, perfect adhesion. |
| **1** | Detachment of only very small parts of the cured layer, almost perfect adhesion. |
| **2** | Minor parts of the cured layer was removed by the tape, good adhesion |
| **3** | Parts of the cured layer were removed by the tape, poor adhesion. |
| **4** | Most of the cured layer was removed by the tape, poor adhesion. |
| **5** | The cured layer was completely removed from the substrate by the tape, no adhesion. |

### Solder resistance

The solder resistance of the inkjet inks was evaluated using a SPL600240 Digital Dynamic Solder Pot available from L&M PRODUCTS filled with a "K" Grade 63:37 tin/lead solder available from SOLDER CONNECTION. The temperature of the solder was set at 270°C.

Using a Q-tip, a solder flux SC7560A from SOLDER CONNECTION was applied on the surface of the samples to clean the surface. The solder flux was dried by placing the samples for 10 minutes above the solder pot.

The sample was put in the solder pot for 10 seconds. This was reproduced 5 times in total after which the samples were cooled for at least 10 minutes.

The adhesion of the inkjet inks after solder dip test was evaluated after the printed samples were cooled down at room temperature. Then they were evaluated by visual observation of peeling off/delamination. Samples were ok if no peel off/adhesion loss was observed.

If solder was observed on top of a printed layer, this was definite sign of a failed solder dip test (solder mask was peeled off and solder could attach to copper beneath it).

### ENIG Resistance

An ENIG simulation as described below was carried out:
- The boards were dipped in a bath of acid cleaner (Umicore cleaner 865) at 40 °C during 4 min. The boards were then removed and dipped in a rinsing bath of deionized water (DW) at room temperature (RT) during 90 seconds.
- The boards were dipped in a microetching bath comprising 8.5 wt% Na₂S₂0₈ and ± 3.2 wt% H₂SO₄ (98 %) in water at a temperature between 26-33 °C for 100 s. The boards were then removed and rinsed in respectively DW, a 2.5 wt% aqueous H₂SO₄ solution and DW, all at RT during 90 seconds.

- The boards were dipped in a palladium activator bath (Accemulta MKN 4) at a temperature around 30 °C for 90 s followed by dipping in a 5 wt% aqueous H₂SO₄ solution at RT during 75 seconds. The boards were then removed and dipped in a rinsing bath of DW at RT during 90 seconds.
- Then the boards were dipped in a nickel bath (Nimuden NPR 4) at a temperature around 85 °C for 35 min. The boards were then removed and dipped in a rinsing bath of DW at RT during 90 s.
- Finally, the boards were dipped in a gold bath (Gobright TAM 55) at a temperature around 80 °C for 12 min. The boards were then removed and dipped in a rinsing bath of DW at RT during 90 s.

The adhesion was evaluated by the cross hatch test followed by a tape test with a TesatapeTM 4104 PVC tape as described above.

### Inkjet printing

The inkjet inks were printed using a Craftpix CPS (Printhead Konica Minolta KM1024iM, UV LED 395 12 W total output of the lamp) on a semi cured soldermask board from different suppliers using a resolution of 1440 (in the x-direction)*1080 (in the y-direction) dpi in order to obtain a legend ink layer having a final thickness of +/- 20 µm.

The required energy for the legend ink layer was between 300 - 600 mJ/cm² (measured with EIT PowerPuck LEDCure 395/40W).

After printing the samples were baked in an oven at 150°C for 1 hour.

### Example 1

This example illustrates the influence of the weight ratio of VEEA and polyfunctional acrylate on adhesion, solder and ENIG resistance.

### Preparation of white dispersion

600 g of a concentrated white dispersion (WD) having a composition according to Table 3 was prepared by mixing 214 g VEEA, 6 g of a solution containing 4 wt% of 4-methoxyphenol, 10 wt% of 2,6-di-tert-butyl-4-methylphenol, 3,6 wt% of Aluminum-N-nitroso phenylhydroxyl amine in DPGDA, 80 g of Disperbyk 162 and 300 g of TiO₂ using a DISPERLUX^{™} dispenser. Stirring was continued for 30 minutes.

The vessel was then connected to a Dynomill research lab mill filled with 200 g of 0.4 mm yttrium stabilized zirconia beads ("high wear resistant zirconia grinding media" from TOSOH Co.).

The mixture was circulated over the mill over 82 minutes (residence time of 10 minutes) and a rotation speed in the mill of about 11.8 m/s. During the complete milling procedure the content in the mill was cooled to keep the temperature below 60°C. After milling, the dispersion was discharged into a vessel.

**Table 3**

| **Components WD** | **wt%** |
|---|---|
| Ti0₂ | 50 |
| Disperbyk 162 | 3 |
| INHIB | 1 |
| VEEA | 46 |

### Preparation of the inkjet inks INK-1 to INK-7

The radiation curable inkjet inks INK-1 to INK-7 were prepared according to Table 4. The weight percentages (wt%) are all based on the total weight of the radiation curable inkjet ink.

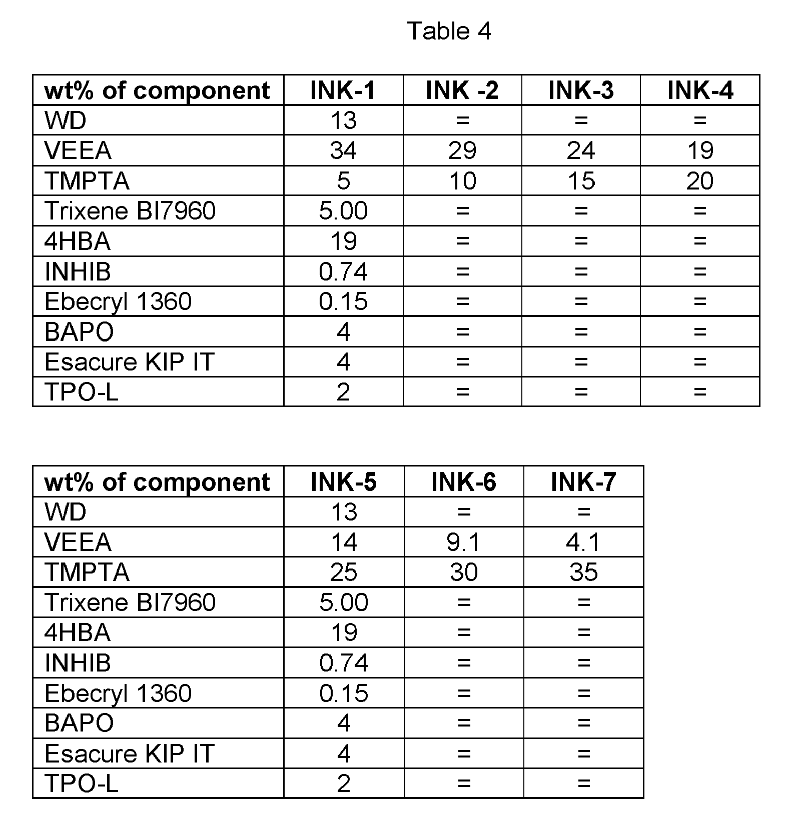

The adhesion, solder and ENIG measured as described above are shown in Table 5.

**Table 5**

| | **Adhesion** | **Solder Resistance** | **ENIG Resistance** | **VEEA/ Polyacrylate** |
|---|---|---|---|---|
| INK-1 | 2 | 2 | 1.5 | 6.8 |
| INK-2 | 2 | 2 | 2 | 2.9 |
| INK-3 | 2.5 | 2.5 | 2.5 | 1.6 |
| INK-4 | 2.5 | 2.5 | 2.5 | 0.95 |
| INK-5 | 2.5 | 2.5 | 2.5 | 0.56 |
| INK-6 | 3 | 3 | 2.5 | 0.3 |
| INK-7 | 3 | 3 | 4 | 0.12 |

It is clear from the results of Table 5 that the inkjet inks comprising VEEA and a polyfunctional acrylate in a ratio (VEEA/Polyacrylate) of at least 0.5 (INK-1 to INK-5) have a better adhesion, solder resistance and ENIG resistance compared to inkjet inks having such a ratio lower than 0.5 (INK-6 and INK-7).

### Example 2

This example illustrates the effect of a thermal crosslinking agent in an inkjet ink according to the present invention.

### Preparation of the inkjet inks INK-8 to INK-16

The radiation curable inkjet inks INK-8 to INK-16 were prepared according to Table 6. The weight percentages (wt%) are all based on the total weight of the radiation curable inkjet ink.

**Table 6**

| **wt% of component** | **INK-8** | **INK-9** | **INK-10** | **INK-11** | **INK-12** |
|---|---|---|---|---|---|
| WD | 26 | = | = | = | = |
| VEEA | 24 | 22 | 19 | 17 | 14 |
| TMPTA | 20 | = | = | = | = |
| Trixene BI7960 | - | 2.5 | 5 | 7.5 | 10 |
| 4HBA | 19 | = | = | = | = |
| INHIB | 0.74 | = | = | = | = |
| Ebecryl 1360 | 0.15 | = | = | = | = |
| BAPO | 4 | = | = | = | = |
| Esacure KIP IT | 4 | = | = | = | = |
| TPO-L | 2 | = | = | = | = |

| **wt% of component** | **INK-13** | **INK-14** | **INK-15** | **INK-16** | |
|---|---|---|---|---|---|
| WD | 26 | = | = | = | |
| VEEA | 19 | 19 | 14 | 14 | |
| TMPTA | 20 | = | = | = | |
| Trixene BI7982 | 5 | | 10 | | |
| Trixene BI7981 | | 5.8 | | 11.6 | |
| 4HBA | 19 | = | = | = | |
| INHIB | 0.74 | = | = | = | |
| Ebecryl 1360 | 0.15 | = | = | = | |
| BAPO | 4 | = | = | = | |
| Esacure KIP IT | 4 | = | = | = | |
| TPO-L | 2 | = | = | = | |

The adhesion, solder and ENIG measured as described above are shown in Table 7.

**Table 7**

| | **Adhesion** | **Solder Resistance** | **ENIG Resistance** |
|---|---|---|---|
| INK-8 | 4 | 5 | 5 |
| INK-9 | 3 | 4 | 3.5 |
| INK-10 | 3 | 3 | 3.5 |
| INK-11 | 2.5 | 3 | 2 |
| INK-12 | 2 | 2 | 1.5 |
| INK-13 | 2.5 | 2.5 | 1 |
| INK-14 | 4 | 5 | 2.5 |
| INK-15 | 2 | 1.5 | 1.5 |
| INK-16 | 3 | 3 | 4 |

It is clear from the results of Table 7 that inkjet inks comrising a thermal crosslinking agent (INK-9 to INK-16) have a better adhesion, solder resistance and ENIG resistance compared to an inkjet ink, which does not comprise such a thermal crosslinking agent (INK-8).

### Example 3

This example illustrates the effect of a multifunctional acrylate.

The radiation curable inkjet inks INK-1 to INK-7 were prepared according to Table 8. The weight percentages (wt%) are all based on the total weight of the radiation curable inkjet ink.

**Table 8**

| **wt% of component** | **INK-17** | **INK -18** | **INK-19** | **INK-20** |
|---|---|---|---|---|
| **WD** | 26 | = | = | = |
| **VEEA** | 34 | 29 | 24 | 19 |
| **Ebecryl 160** | 5 | 10 | 15 | 20 |
| **Trixene BI7960** | 5.00 | = | = | = |
| **4HBA** | 19 | = | = | = |
| **INHIB** | 0.74 | = | = | = |
| **Ebecryl 1360** | 0.15 | = | = | = |
| **BAPO** | 4 | = | = | = |
| **Esacure KIP IT** | 4 | = | = | = |
| **TPO-L** | 2 | = | = | = |

The adhesion, solder and ENIG measured as described above are shown in Table 9.

**Table 9**

| | **Adhesion** | **Solder Resistance** | **ENIG Resistance** | **VEEA/ Polyacrylate** |
|---|---|---|---|---|
| **INK-17** | 2.5 | 2.5 | 1.5 | 8.5 |
| **INK-18** | 2 | 2 | 2 | 2.9 |
| **INK-19** | 2 | 2 | 2 | 1.6 |
| **INK-20** | 1.5 | 2.5 | 2.5 | 0.95 |

It is clear from the results of Table 9 that the inkjet inks comprising VEEA and a polyfunctional acrylate in a ratio (VEEA/Polyacrylate) of at least 0.5 (INK-17 to INK-20) have an acceptable adhesion, solder resistance and ENIG resistance.

## Claims

1. A radiation curable inkjet ink comprising:
- a vinylether (meth)acrylate,
- a polyfunctional (meth)acrylate, and
- a thermal cross-linking agent,
**characterized in that** a weight ratio vinylether (meth)acrylate/ polyfunctional (meth)acrylate is at least 0.5.

2. The radiation curable inkjet ink according to claim 1 wherein the vinylether (meth)acrylate is 2-(2-vinyloxyedioxy)ethyl acrylate (VEEA).

3. The radiation curable inkjet ink according to claim 1 or 2 wherein the polyfunctional (meth)acrylate is selected from the group consisting of trimethylolpropane triacrylate and ditrimethylolpropane tetraacrylate.

4. The radiation curable inkjet ink according to any of the preceding claims wherein the amount of vinylether (meth)acrylate is from 15 up to 25 wt%, relative to the total weight of the inkjet ink.

5. The radiation curable inkjet ink according to any of the preceding claims wherein the amount of polyfunctional (meth)acrylate is from 5 up to 25 wt%, relative to the total weight of the inkjet ink

6. The radiation curable inkjet ink according to any of the preceding claims wherein the amount of the thermal cross-linking agent is at least 2.5 wt%, relative to the total weight of the inkjet ink.

7. The radiation curable inkjet ink according to any of the preceding claims wherein the thermal cross-linking agent is preferably a blocked isocyanate compound.

8. The radiation curable inkjet ink according to claim 7 wherein the blocked isocyanate compound is selected from the group consisting of a blocked hexamethyleendiisocyanaat (HDI) biuret and a HDI trimer.

9. A method of manufacturing an electronic device including an inkjet printing step wherein a radiation curable inkjet ink as defined in any of the claims 1 to 8 is jetted and cured on a substrate.

10. The method according claim 9 wherein curing is carried out using LED UV radiation.

11. The method according to claim 9 or 10 also comprising a heating step.

12. The method according to claim 11 wherein the heating step is carried out at a temperature from 80 °C up to 250 °C.

13. The method according to any of the claims 9 to 12 wherein the substrate is a solder mask.

14. Use of a radiation curable inkjet ink according to any of the claims 1 to 8 for legend printing in the manufacture of a Printed Circuit Board.
